# EUROPEAN PATENT SPECIFICATION

(11) **EP 0 599 566 B1**
(45) Date of publication and mention of the grant of the patent: **14.08.1996**
(21) Application number: 93309255.3
(22) Date of filing: 19.11.1993
(51) Int. Cl.: B60C 11/00, B60C 11/03

(54) **Method of selecting a tyre tread pattern for preventing vehicle skew**
Verfahren zur Auswahl eines Laufflächenprofils, der ein Schräglaufen des Fahrzeuges verhindert
Méthode ou sélection d'un dessin de bande de roulement, qui évite la mise en travers du véhicule

(30) Priority: 20.11.1992 JP 333810/92
(43) Date of publication of application: 01.06.1994
(73) Proprietor: SUMITOMO RUBBER INDUSTRIES LIMITED, Chuo-ku Kobe-shi Hyogo 651 (JP)
(72) Inventor: Wakabayashi, Noboru, Karumu Gakuen Midorigaoka, Tarumi-ku, Kobe-shi, Hyogo-ken (JP)
(74) Representative: Stewart, Charles Geoffrey

(56) References cited:
- EP-A- 0 321 384
- GB-A- 2 178 380
- US-A- 4 962 801
- S.K.CLARK 'mechanics of pneumatic tires' 1 August 1981 , U.S.DEPARTMENT TRANSPORTATION , WASHINGTON D.C.20402,

## Description

To ensure good water drainage, many roads on which vehicles travel are constructed with a small inclination from the centre to either edge of the road. Vehicles running on such roads are subjected to a "skew force" which causes them to drift from the centre of the road towards either edge following the slope. If a driver removes his hands from the steering wheel, the vehicle will deviate in a sideways direction from the initial straight line of travel. This often causes "skewing" of the vehicle.

To solve this problem, attempts have been made to control the direction of breaker reinforcements and/or the stiffness of the breaker in such a way that the residual cornering force (RCF) acts in a direction to cancel the effect of the slope of the road surface. However with tyre structural designs that can be utilised on conventional vehicles, marked changes in RCF are not possible and the approach described has often proved to be unsatisfactory. The problem is further complicated by the fact that the skew force varies greatly with the vehicle weight.

It is thus an object of the present invention to provide a method for selecting, according to the vehicle weight, a suitable tyre tread pattern which enables a vehicle to run in a straight direction on a sidewise sloping road with better manoeuvrability. The method comprises equipping a vehicle with a tyre that is suited for the weight of the vehicle and which produces an inherent residual cornering force to counteract skewing.

Another object of the present invention is to provide a vehicle whose weight is appropriate for a tyre having a tread pattern selected to compensate for the skew force.

In accordance with a first aspect of the present invention there is provided a method of selecting a tyre tread pattern according to vehicle weight characterised by equipping a vehicle weighing M kg with a tyre that has grooves and sipes at angles of no more than 90 degrees with respect to the rotational axis of the tyre and in which the region from the centre of either edge of the road contacting surface is divided into three equal portions, a crown portion, a middle portion and a shoulder portion, the centre being defined in association with the direction in which the road contacting surface of the tyre rotates and the edge being defined as the axial edge of the road contacting surface where the tyre has a tread pattern with a pattern index PI that satisfies the relationship with respect to the residual cornering force (RCF) inherent in the tread pattern:$\text{0.9 ≦ (60·PI+900)M ≦ 1.1}$ where${\text{PI = (ΔRCF}}_{\text{CR}} {\text{+ΔRCF}}_{\text{SH}} {\text{) + (ΔRCF}}_{\text{CR1}} {\text{+ΔRCF}}_{\text{SH1}} \text{);}$ wherein (ΔRCF_{CR} + ΔRCF_{SH}) represents the residual cornering force developed by grooves in the tread pattern, which is determined by the equations:$\begin{matrix}\begin{matrix}{\text{Crown portion: Δ RCF}}_{\text{CR}} \text{= Σ(-0.020·m·α·θ)} \\ {\text{Shoulder portion: Δ RCF}}_{\text{SH}} \text{= Σ(0.047·n·β·δ)}\end{matrix}\end{matrix}$ and the term (Δ RCF_{CR1} + Δ RCF₁) represents the residual cornering force developed by sipes in the tread pattern and is determined by the equations:$\begin{matrix}\begin{matrix}{\text{Crown portion: Δ RCF}}_{\text{CR1}} {\text{= Σ(0.020·m}}_{\text{1}} {\text{·α}}_{\text{1}} {\text{·θ}}_{\text{1}} \text{)} \\ {\text{Shoulder portion: Δ RCF}}_{\text{SH1}} {\text{= Σ(0.021·n}}_{\text{1}} {\text{·β}}_{\text{1}} {\text{·δ}}_{\text{1}} \text{)}\end{matrix}\end{matrix}$ where the symbols used in the four equations have the following meanings:
- m is: the number of grooves in the crown portion of road contacting surface of the tyre;
- n is: the number of grooves in the shoulder portion of the road contacting surface of the tyre;
- α is: the ratio of the axial length of a groove in the crown portion of the road contacting surface of the tyre to the length of the crown portion;
- θ is: the angle a groove in the crown portion of the road contacting surface of the tyre forms with the axial direction of the tyre;
- β is: the ratio of the axial length of a groove in the shoulder portion of the road contacting surface of the tyre to the length of the shoulder portion;
- δ is: the angle a groove in the shoulder portion of the road contacting surface of the tyre forms with the axial direction of the tyre;
- m₁ is: the number of sipes in the crown portion of the road contacting surface of the tyre;
- n₁ is: the number of sipes in the shoulder portion of the road contacting surface of the tyre;
- α₁ is: the ratio of the axial length of a sipe in the crown portion of the road contacting surface of the tyre to the length of the crown portion;
- θ₁ is: the angle a sipe in the crown portion of the road contacting surface of the tyre forms with the axial direction of the tyre;
- β₁ is: the ratio of the axial length of a sipe in the shoulder portion of the road contacting surface of the tyre to the length of the shoulder portion; and
- δ₁ is: the angle a sipe in the shoulder portion of the road contacting surface of the tyre forms with the axial direction of the tyre.

Thus in the present invention, a tyre is selected in accordance with the vehicle weight M kg such that it has a tread pattern with a pattern index PI that provides a residual cornering force (RCF) by means of the appropriate tread pattern. The vehicle equipped with this tyre has improved manoeuvrability in running straight on a sidewise sloping road while experiencing only limited "skew".

In accordance with the second aspect of the present invention, a method if provided for selecting a vehicle having a weight M kg and which is equipped with a tyre having a tread pattern whose pattern index PI as defined hereinabove satisfies the following relationship with vehicle weight M:$\text{0.9 ≦ (60·PI+900)/M ≦ 1.1}$

In the present invention, a selected vehicle weighing M kg is equipped with a tyre having a tread pattern whose pattern index PI satisfies the specified relationship with the vehicle weight M kg and this also ensures improved manoeuvrability in running straight so that the vehicle can travel on a sidewise sloping road in a stable manner while experiencing only limited "skew".

The following detailed description of the invention will be more readily understood when considered together with the accompanying drawings in which:-
Figure 1 is an illustration of a tyre tread pattern designed in accordance with one embodiment of the present invention; and
Figure 2 is a graph illustrating the relationship between residual cornering force (RCF) and pattern index (PI).

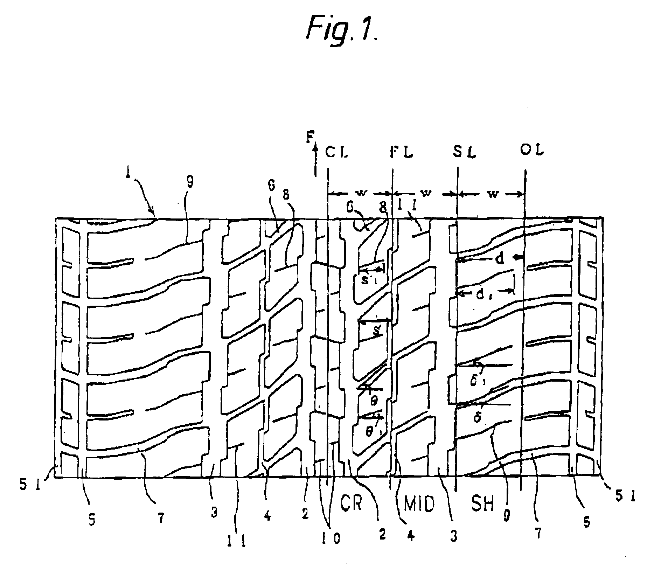

The tread pattern 1 of Figure 1 comprises a first pair of circumferentially extending, zigzag main grooves 2 located in the central portion of the tread with respect to the tyre's width (indicated by arrow F). The first pair of main grooves 2 are generally parallel to each other and are comparatively close together. A second pair of circumferentially extending, zigzag main grooves 3 are spaced outwards from the first main grooves 2 by a predetermined distance either side of the tyre. A first pair of zigzag subgrooves 4 lie on each of the first main grooves 2 and the second main grooves 3. The zigzag subgrooves 4 are comparatively narrower than the main grooves 2 and 3. A second pair of straight, circumferentially extending subgrooves 5 and 51 are positioned near the edges of the tread 1. First transverse grooves 6 extend across each first subgroove 4 and connect at opposite ends to a first main groove 2 and a second main groove 3. The transverse grooves 6 extend at an angle of θ with respect to the axial direction. Second transverse grooves 7 extend between the second main groove 3 and the second subgroove 5 and lie at an angle of δ with respect to the axial direction of the tyre.

First sipes 8 extend from the sidewalls of both first main grooves 2 outwards in the axial direction of the tyre at an angle of θ₁. Second sipes 9 extend from the sidewalls of both second main grooves 3 and outwards in the axial direction of the tyre are at an angle of δ₁. Auxiliary sipes 10 and 11 extend from the sidewalls of the first and second main grooves 2 and 3, respectively, towards the centre of the tyre tread.

The centre of the road contacting surface of the tread 1 which in most cases coincides with the centre line of the tread is designated by CL in Figure 1. The area between CL and each edge OL of the road contacting surface in the axial direction of the tyre is divided into three equal portions by lines FL and SL spaced apart by equal distances w. The three equal portions are defined (in order from the centre of the road contacting surface CL) as a crown portion CR, a middle portion MID and a shoulder portion SH.

Next will be described the residual cornering force RCF developed by the tread pattern in the road contacting surface of the tyre.

As far as the road contacting surface of the tyre is concerned, those parts of the patterns which contribute to increases in residual cornering force RCF are not the first main grooves 2, the second main grooves 3 or the first subgrooves 4 which extend circumferentially around the tyre. Instead it is the grooves and sipes that extend axially. Stated more specifically, the contributing parts are the grooves and sipes that are provided in the crown portion CR and the shoulder portion SH which lie axially outwards. The grooves and sipes located in the middle portion and the MID portion do not significantly contribute to adjustment of the RCF.

As shown in Figure 1, the first transverse grooves 6 in the crown portion CR which slope upwards to the right of the centre line CL have a negative (-) effect on the increase of the residual cornering force RCF. The amount of contribution Δ RCF_{CR} is calculated by the following equation${\text{Δ RCF}}_{\text{CR}} \text{= Σ(-0.020·m·α·θ)}$ where
- m is: the number of first transverse grooves 6 in the crown portion CR
- α is: the ratio of the axial length s of a groove 6 to the width w of the crown portion CR; and
- θ is: the angle formed by a groove 6 with respect to the axial direction of the tyre, with the counterclockwise direction taken as positive.

The second transverse grooves 7 in the shoulder portion SH which slope upwards to the right have a positive (+) effect on the increase of the residual cornering force RCF. The amount of contribution ΔRCF_{SH} is calculated by the following equation:${\text{ΔRCF}}_{\text{SH}} \text{= Σ(0.047·n·β·δ)}$ where
- n is: the number of second transverse grooves 7 in the shoulder portion SH;
- β is: the ratio of the axial length d of a groove 7 to the width w of the shoulder portion SH; and
- δ is: the angle formed by a groove 7 with respect to the axial direction of the tyre, with the counterclockwise direction taken as positive.

The first sipes 8 in the crown portion CR slope upwards to the right and have a negative (1) effect on the increase of the residual cornering force RCF. The amount of contribution ΔRCF_{CR1} is calculated by the following equation:${\text{ΔRCF}}_{\text{CR1}} {\text{= Σ(-0.020·m}}_{\text{1}} {\text{·α}}_{\text{1}} {\text{·θ}}_{\text{1}} \text{)}$ where
- m₁ is: the number of sipes 8 in the crown portion CR
- α₁ is: the ratio of the axial length s₁ of a sipe 6 to the width w of the crown portion CR; and
- θ₁ is: the angle formed by a sipe 8 with respect to the axial direction of the tyre, with the counterclockwise direction taken as positive.

The second sipes 9 in the shoulder portion SH which slope upwards to the right have a positive (+) effect on the increase of the residual cornering force RCF. The amount of contribution ΔRCF_{SH1} is calculated by the following equation:${\text{ΔRCF}}_{\text{SH1}} {\text{= Σ(0.021·n}}_{\text{1}} {\text{·β}}_{\text{1}} {\text{·δ}}_{\text{1}} \text{)}$ where
- n₁ is: the amount of sipes 9 in the shoulder portion SH;
- β₁ is: the ratio of the axial length d₁ of a sipe 9 to the width w of the shoulder portion SH; and
- δ₁ is: the angle formed by a sipe 9 with respect to the axial direction of the tyre, with the counterclockwise direction taken as positive.

On the basis of the thus calculated amounts of contribution to the residual cornering force RCF, the pattern index PI of the tread pattern is calculated by the following equation:${\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{)}$ where (ΔRCF_{CR} + ΔRCF_{SH}) represents the amount of contribution made by the grooves and (ΔRCF_{CR1} + ΔRCF_{SH1}) the amount of contribution made by the sipes.

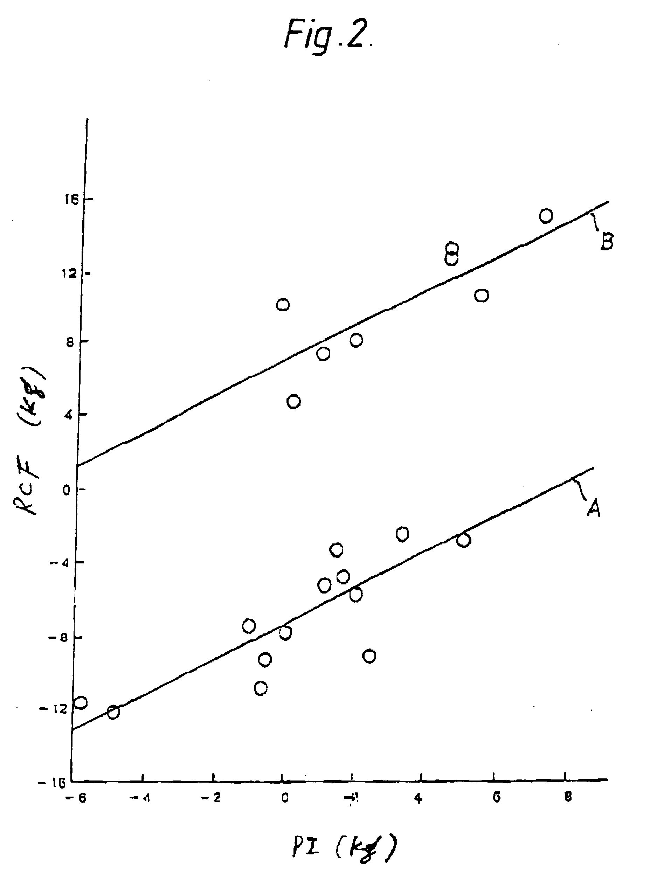

Figure 2 is a graph plotting the residual cornering force RCF against various values of the pattern index PI. Straight line A in the graph refers to a tyre sample in which the breaker cords embedded in the tyre tread are arranged in the normal direction whereas straight line B refers to a tyre sample in which the breaker cords are arranged in the reverse direction which is symmetric to the normal direction with respect to the direction of tyre revolution. As seen from the graph, the change in the direction of arrangement of breaker cords causes a difference of between 14 and 15 kg in the residual cornering force RCF.

In accordance with the present invention, the pattern index PI of the tyre to be mounted on a vehicle weighing M (kg) is set to satisfy the following condition:$\text{0.9 ≦ (60·PI+900)/M ≦ 1.1}$

If M is 800 kg, PI should be within the range of between -3 (inclusive) to 0.3 (inclusive) in order to satisfy this condition. If M is 1200 kg, 3≦PI≦7.

Four tyre samples were prepared in accordance with the present invention and at the same time four comparative samples were prepared adopting a conventional structure. These samples were mounted on a vehicle that was subject to a "skew test", in which the vehicle ran on a flat road at a speed of 80 km/h over a distance of 100m where the amount by which the vehicle deviated either to the right or left from a straight line was measured. The results are shown below in Table 1 (for the samples of the present invention) and Table 2 (for comparative samples).

**TABLE 1**

| Sample No | 1 | 2 | 3 | 4 |
|---|---|---|---|---|
| Tyre size | 155/70R13 | 155/70R13 | 185/70R13 | 185/70R13 |
| Vehicle weight | 820 | 820 | 1160 | 1160 |
| PI | -2.0 | 0.0 | 3.0 | 6.0 |
| (60·PI+900)/M | 0.95 | 1.10 | 0.93 | 1.09 |
| Skew (R: right L: left | L 0.2 | R 0.3 | L 0.3 | R 0.3 |

**TABLE 2**

| Sample No | 1 | 2 | 3 | 4 |
|---|---|---|---|---|
| Tyre size | 155/70R13 | 155/70R13 | 185/70R13 | 185/70R13 |
| Vehicle weight | 820 | 820 | 1160 | 1160 |
| PI | -4.0 | 2.0 | 0.0 | 9.0 |
| (60·PI+900)/M | 0.80 | 1.24 | 0.78 | 1.24 |
| Skew (R: right L: left | L 1.8 | R 2.0 | L 2.2 | R 2.1 |

As seen from Tables 1 and 2, the possible skew of a vehicle can be reduced by selecting tyres that have PI values satisfying the condition $\text{0.9 ≦ (60·PI+900)/M ≦ 1.1}$. Thus, the vehicle can travel straight in a stable manner not only on a flat road but also on a non-flat road that slopes towards either side in a direction that crosses the direction in which the vehicle travels.

In its second aspect, the present invention provides a method for selecting a vehicle that weighs M (kg) which is equipped with a tyre having a tread pattern whose pattern index PI as defined hereinabove satisfies the following relationship with respect to the vehicle weight M:$\text{0.9 ≦ (60·PI+900)M ≦ 1.1.}$

In accordance with this second aspect, a vehicle is selected in such a way that its weight M satisfies the specified relationship with the pattern index PI of the tread pattern of the tyre which is to be mounted on the vehicle; this ensures improved manoeuvrability in running straight and the vehicle can travel on a sidewise sloping road in a stable manner while experiencing only limited "skew".

Having the structural features described hereinabove, the present invention offers the following advantages.

First, a tyre may be selected for a vehicle in accordance with its weight such that the tyre has a tread pattern with a pattern index PI that produces an inherent residual cornering force (RCF) to improve the vehicle's manoeuvrability in straight running along a sidewise sloping road while experiencing only limited "skew".

Alternatively, a vehicle may be selected for receiving a tyre in such a way that its weight satisfies the specified relationship with the pattern index of the tread pattern that ensures improved manoeuvrability in straight running on a sidewise sloping road in a stable manner while experiencing only limited "skew".

## Claims

1. A method of selecting a tyre tread pattern according to vehicle weight comprising equipping a vehicle weighing M (kg) with a tyre (1) having a tread with grooves and sipes in which the width from the centre CL of the tread (1) to either edge of the road contacting surface is divided into three equal portions, a crown portion (CR), a middle portion (MID) and a shoulder portion (SH), characterised in that the tread has a pattern index PI that satisfies the following conditions:$\begin{matrix}\begin{matrix}\text{0.9 ≦ (60·PI+900)M ≦ 1.1} \\ {\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{) ;} \\ {\text{ΔRCF}}_{\text{CR}} \text{= Σ(-0.20·m·α·θ)}\end{matrix}\end{matrix}$ ....the sum of (-0.020·m·α·θ) on the road contacting surface;${\text{ΔRCF}}_{\text{SH}} \text{= Σ(0.047·n·β·δ)}$ ....the sum of (0.047·n·β·δ) on the road contacting surface;${\text{ΔRCF}}_{\text{CR1}} {\text{= Σ(0.021·m}}_{\text{1}} {\text{·α}}_{\text{1}} {\text{·θ}}_{\text{1}} \text{)}$ ....the sum of (-0.020·m₁·α₁·θ₁) on the road contacting surface;${\text{ΔRCF}}_{\text{SH1}} {\text{= Σ(0.021·n}}_{\text{1}} {\text{·β}}_{\text{1}} {\text{·δ}}_{\text{1}} \text{)}$ ....the sum of (0.021·n₁·β₁·δ₁) on the road contacting surface;
where
m is the number of grooves in the crown portion of road contacting surface of the tyre;
n is the number of grooves in the shoulder portion (SH) of the road contacting surface the tyre;
α is the ratio of the axial length of a groove in the crown portion (CR) of the road contacting surface of the tyre to the length of the crown portion (CR);
θ is the angle a groove in the crown portion (CR) of the road contacting surface of the tyre forms with the axial direction of the tyre;
β is the ratio of the axial length of a groove in the shoulder portion (SH) of the road contacting surface of the tyre to the length of the shoulder portion;
δ is the angle a groove in the shoulder portion (SH) of the road contacting surface of the tyre forms with the axial direction of the tyre;
m₁ is the number of sipes (8) in the crown portion of the road contacting surface of the tyre;
n₁ is the number of sipes (9) in the shoulder portion of the road contacting surface of the tyre;
α₁ is the ratio of the axial length of a sipe (8) in the crown portion (CH) of the road contacting surface of the tyre to the length of the crown portion(CR);
θ₁ is the angle a sipe (8) in the crown portion (CR) of the road contacting surface of the tyre forms with the axial direction of the tyre;
β₁ is the ratio of the axial length of a sipe (9) in the shoulder portion (SH) of the road contacting surface of the tyre to the length of the shoulder portion; and
δ₁ is the angle a sipe (9) in the shoulder portion (SH) of the road contacting surface of the tyre forms with the axial direction of the tyre.

2. A method of selecting a vehicle weighing M kg for a tyre to counteract skew, characterised by selecting a tyre having a tread (1) with grooves and sipes in which the area from the centre of the tread to either edge of the road contacting surface is divided into three equal portions, a crown portion (CR), a middle portion (MID) and a shoulder portion (SH), said tread (1) having a pattern index PI that satisfies the following conditions:$\begin{matrix}\begin{matrix}{\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{);} \\ {\text{ΔRCF}}_{\text{CR}} \text{= Σ(-0.020·m·α·θ)}\end{matrix}\end{matrix}$ ....the sum of (-0.020·m·α·θ) on the road contacting surface;${\text{ΔRCF}}_{\text{SH}} \text{= Σ(0.047·n·β·δ)}$ ....the sum of (0.047·n·β·δ) on the road contacting surface;${\text{ΔRCF}}_{\text{CR1}} {\text{= Σ(0.020·m}}_{\text{1}} {\text{·α}}_{\text{1}} {\text{·θ}}_{\text{1}} \text{)}$ ....the sum of (0.020·m₁·α₁·θ₁) on the road contacting surface;${\text{ΔRCF}}_{\text{SH1}} {\text{= Σ(0.021·n}}_{\text{1}} {\text{·β}}_{\text{1}} {\text{·δ}}_{\text{1}} \text{)}$ ....the sum of (0.021·n₁·β₁·δ₁) on the road contacting surface;
where
m is the number of grooves in the crown portion (CR) of road contacting surface of the tyre;
n is the number of grooves in the shoulder portion (SH) of the road contacting surface of the tyre;
α is the ratio of the axial length of a groove in the crown portion (CR) of the road contacting surface of the tyre to the length of the crown portion (CR);
θ is the angle a groove in the crown portion (CR) of the road contacting surface of the tyre forms with the axial direction of the tyre;
β is the ratio of the axial length of a groove in the shoulder portion (SH) of the road contacting surface of the tyre to the length of the shoulder portion (SH);
δ is the angle a groove in the shoulder portion (SH) of the road contacting surface of the tyre forms with the axial direction of the tyre;
m₁ is the number of sipes (8) in the crown portion (SH) of the road contacting surface of the tyre;
n₁ is the number of sipes (9) in the shoulder portion (SH) of the road contacting surface of the tyre;
α₁ is the ratio of the axial length of a sipe (8) in the crown portion (CR) of the road contacting surface of the tyre to the length of the crown portion (CR);
θ₁ is the angle a sipe (8) in the crown portion (CR) of the road contacting surface of the tyre forms with the axial direction of the tyre;
β₁ is the ratio of the axial length of a sipe (9) in the shoulder portion (SH) of the road contacting surface of the tyre to the length of the shoulder portion;
and
δ₁ is the angle a sipe (9) in the shoulder portion (SH) of the road contacting surface of the tyre forms with the axial direction of the tyre;
and
selecting the vehicle for said tyre having the tread pattern with pattern index PI such that:$\text{0.9 ≦ (60·PI+900)/M ≦ 1.1.}$

3. A pneumatic tyre for a vehicle weighing M kg to counteract skewing, comprising a tread with grooves and sipes in which the area from the centre of the tread to either edge of the round contacting surface is divided into three equal portions, a crown portion (CR), a middle portion (MID) and a shoulder portion (SH), characterised in that said tread has a pattern index PI that satisfies the following conditions:$\begin{matrix}\begin{matrix}\text{0.9 ≦ (60·PI+900)/M ≦ 1.1;} \\ {\text{PI = (ΔRCF}}_{\text{CR}} {\text{+ ΔRCF}}_{\text{SH}} {\text{) + (ΔRCF}}_{\text{CR1}} {\text{+ΔRCF}}_{\text{SH1}} \text{);}\end{matrix}\end{matrix}$ where${\text{ΔRCF}}_{\text{CR}} \text{= Σ(-0.020·m·α·θ)}$ ....the sum of (-0.020·m·α·θ) on the road contacting surface;${\text{ΔRCF}}_{\text{SH}} \text{= Σ(0.047·n·β·δ)}$ ....the sum of (0.047·n·β·δ) on the road contacting surface;${\text{ΔRCF}}_{\text{CR1}} {\text{= Σ(0.020·m}}_{\text{1}} {\text{·α}}_{\text{1}} {\text{·θ}}_{\text{1}} \text{)}$ ....the sum of (0.020·m₁·α₁·θ₁) on the road contacting surface;${\text{ΔRCF}}_{\text{SH1}} {\text{= Σ(0.021·n}}_{\text{1}} {\text{·β}}_{\text{1}} {\text{·δ}}_{\text{1}} \text{)}$ ....the sum of (0.021·n₁·β₁·δ₁) on the road contacting surface;
where
m is the number of grooves in the crown portion (CR) of road contacting surface of the tyre;
n is the number of grooves in the shoulder portion (SH) of the road contacting surface of the tyre;
α is the ratio of the axial length of a groove in the crown portion (CR) of the road contacting surface of the tyre to the length of the crown portion (CR);
θ is the angle a groove in the crown portion (CR) of the road contacting surface of the tyre forms with the axial direction of the tyre;
β is the ratio of the axial length of a groove in the shoulder portion (SH) of the road contacting surface of the tyre to the length of the shoulder portion (SH);
δ is the angle a groove in the shoulder portion (SH) of the road contacting surface of the tyre forms with the axial direction of the tyre;
m₁ is the number of sipes (8) in the crown portion (SH) of the road contacting surface of the tyre;
n₁ is the number of sipes (9) in the shoulder portion (SH) of the road contacting surface of the tyre;
α₁ is the ratio of the axial length of a sipe (8) in the crown portion (CR) of the road contacting surface of the tyre to the length of the crown portion (CR);
θ₁ is the angle a sipe (8) in the crown portion (CR) of the road contacting surface of the tyre forms with the axial direction of the tyre;
β₁ is the ratio of the axial length of a sipe (9) in the shoulder portion (SH) of the road contacting surface of the tyre to the length of the shoulder portion;
and
δ₁ is the angle a sipe (9) in the shoulder portion (SH) of the road contacting surface of the tyre forms with the axial direction of the tyre.

## Patentansprüche

1. Ein Verfahren zur Auswahl eines Reifenlaufflächenprofils entsprechend dem Fahrzeuggewicht, welches umfaßt, daß ein M (kg) wiegendes Fahrzeugs mit einem Reifen (1) ausgerüstet wird, der eine Lauffläche mit Rillen und Einschnitten hat, in der die Breite von der Mitte CL der Lauffläche (1) zu jeder Kante der Straßenkontaktfläche in drei gleiche Bereiche, einen Kronenbereich (CR), einen Mittelbereich (MID) und einen Schulterbereich (SH) unterteilt ist, dadurch gekennzeichnet, daß die Lauffläche einen Profilindex PI hat, der den nachfolgenden Bedingungen genügt:$\begin{matrix}\begin{matrix}\text{0.9 ≦ (60·PI+900)M ≦ 1.1} \\ {\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{);} \\ {\text{ΔRCF}}_{\text{CR}} \text{= Σ(-0.20·m·α·θ)}\end{matrix}\end{matrix}$ ....die Summe von (-0.020·m·α·θ) an der Straßenkontaktfläche;${\text{ΔRCF}}_{\text{SH}} \text{= Σ(0.047·n·β·δ)}$ ....die Summe von (0.047·n·β·δ) an der Straßenkontaktfläche;${\text{ΔRCF}}_{\text{CR1}} {\text{= Σ(0.021·m}}_{\text{1}} {\text{·α}}_{\text{1}} {\text{·θ}}_{\text{1}} \text{)}$ ....die Summe von (-0.020·m₁·α₁·θ₁) an der Straßenkontaktfläche;${\text{ΔRCF}}_{\text{SH1}} {\text{= Σ(0.021·n}}_{\text{1}} {\text{·β}}_{\text{1}} {\text{·δ}}_{\text{1}} \text{)}$ ....die Summe von (0.021·n₁·β₁·δ₁) an der Straßenkontaktfläche;
wobei
m die Anzahl von Rillen in dem Kronenbereich der Straßenkontaktfläche des Reifens ist;
n die Anzahl von Rillen in dem Schulterbereich (SH) der Straßenkontaktfläche des Reifens ist;
α das Verhältnis der axialen Länge einer Rille in dem Kronenbereich (CR) der Straßenkontaktfläche des Reifens zu der Länge des Kronenbereiches (CR) ist;
θ der Winkel ist, den eine Rille in dem Kronenbereich (CR) der Straßenkontaktfläche des Reifens mit der Axialrichtung des Reifens bildet;
β das Verhältnis der axialen Länge einer Rille in dem Schulterbereich (SH) der Straßenkontaktfläche des Reifens zu der Länge des Schulterbereiches ist;
δ der Winkel ist, den eine Rille in dem Schulterbereich (SH) der Straßenkontaktfläche des Reifens mit der Axialrichtung des Reifens bildet;
m₁ die Anzahl von Einschnitten (8) in dem Kronenbereich der Straßenkontaktfläche des Reifens ist;
n₁ die Anzahl von Einschnitten (9) in dem Schulterbereich der Straßenkontaktfläche des Reifens ist;
α₁ das Verhältnis der axialen Länge eines Einschnittes (8) in dem Kronenbereich (CR) der Straßenkontaktfläche des Reifens zu der Länge des Kronenbereiches (CR) ist;
θ₁ der Winkel ist, den ein Einschnitt (8) in dem Kronenbereich (CR) der Straßenkontaktfläche des Reifens mit der Axialrichtung des Reifens bildet;
β₁ das Verhältnis der axialen Länge eines Einschnitts (9) in dem Schulterbereich (SH) der Straßenkontaktfläche des Reifens zu der Länge des Schulterbereiches ist; und
δ₁ der Winkel ist, den ein Einschnitt (9) in dem Schulterbereich (SH) der Straßenkontaktfläche des Reifens mit der Axialrichtung des Reifens bildet.

2. Ein Verfahren zur Auswahl eines Fahrzeugs, das M kg wiegt, für einen Reifen, um der Seitenkraft entgegenzuwirken, dadurch gekennzeichnet, daß ein Reifen ausgewählt wird, der eine Lauffläche (1) mit Rillen und Einschnitten hat, in dem der Bereich von der Mitte der Laufflache zu jeder Kante der Straßenkontaktfläche in drei gleiche Bereiche unterteilt ist, einen Kronenbereich (CR), einen Mittelbereich (MID) und einen Schulterbereich (SH), wobei die Lauffläche (1) einen Profilindex PI hat, der den nachfolgenden Bedingungen genügt:$\begin{matrix}\begin{matrix}{\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{);} \\ {\text{ΔRCF}}_{\text{CR}} \text{= Σ(-0.20·m·α·θ)}\end{matrix}\end{matrix}$ ....die Summe von (-0.020·m·α·θ) an der Straßenkontaktfläche;${\text{ΔRCF}}_{\text{SH}} \text{= Σ(0.047·n·β·δ)}$ ....die Summe von (0.047·n·β·δ) an der Straßenkontaktfläche;${\text{ΔRCF}}_{\text{CR1}} {\text{= Σ(0.021·m}}_{\text{1}} {\text{·α}}_{\text{1}} {\text{·θ}}_{\text{1}} \text{)}$ ....die Summe von (-0.020·m₁·α₁·θ₁) an der Straßenkontaktfläche;${\text{ΔRCF}}_{\text{SH1}} {\text{= Σ(0.021·n}}_{\text{1}} {\text{·β}}_{\text{1}} {\text{·δ}}_{\text{1}} \text{)}$ ....die Summe von (0.021·n₁·β₁·δ₁) an der Straßenkontaktfläche;
wobei
m die Anzahl von Rillen in dem Kronenbereich (CR) der Straßenkontaktfläche des Reifens ist;
n die Anzahl von Rillen in dem Schulterbereich (SH) der Straßenkontaktfläche des Reifens ist;
α das Verhältnis der axialen Länge einer Rille in dem Kronenbereich (CR) der Straßenkontaktfläche des Reifens zu der Länge des Kronenbereiches (CR) ist;
θ der Winkel ist, den eine Rille in dem Kronenbereich (CR) der Straßenkontaktfläche des Reifens mit der Axialrichtung des Reifens bildet;
β das Verhältnis der axialen Länge einer Rille in dem Schulterbereich (SH) der Straßenkontaktfläche des Reifens zu der Länge des Schulterbereiches (SH) ist;
δ der Winkel ist, den eine Rille in dem Schulterbereich (SH) der Straßenkontaktfläche des Reifens mit der Axialrichtung des Reifens bildet;
m₁ die Anzahl von Einschnitten (8) in dem Kronenbereich (CR) der Straßenkontaktfläche des Reifens ist;
n₁ die Anzahl von Einschnitten (9) in dem Schulterbereich (SH) der Straßenkontaktfläche des Reifens ist;
α₁ das Verhältnis der axialen Länge eines Einschnittes (8) in dem Kronenbereich (CR) der Straßenkontaktfläche des Reifens zu der Länge des Kronenbereiches (CR) ist;
θ₁ der Winkel ist, den ein Einschnitt (8) in dem Kronenbereich (CR) der Straßenkontaktfläche des Reifens mit der Axialrichtung des Reifens bildet;
β₁ das Verhältnis der axialen Länge eines Einschnitts (9) in dem Schulterbereich (SH) der Straßenkontaktfläche des Reifens zu der Länge des Schulterbereiches ist; und
δ₁ der Winkel ist, den ein Einschnitt (9) in dem Schulterbereich (SH) der Straßenkontaktfläche des Reifens mit der Axialrichtung des Reifens bildet; und
daß das Fahrzeug für den Reifen mit einem Laufflächenprofil und einem Profilindex PI so ausgewählt wird, daß:$\text{0.9 ≦ (60·PI+900)/M ≦ 1.1.}$

3. Ein Luftreifen für ein Fahrzeug, das M kg wiegt, um einer Seitenkraft entgegenzuwirken, mit einer Lauffläche mit Rillen und Einschnitten, in der der Bereich von der Mitte der Lauffläche zu jeder Kante der Bodenkontaktfläche in drei gleiche Bereich unterteilt ist, einen Kronenbereich (CR), einen Mittelbereich (MID) und einen Schulterbereich (SH), dadurch gekennzeichnet, daß:$\begin{matrix}\begin{matrix}\text{0.9 ≦ (60·PI+900)M ≦ 1.1} \\ {\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{);} \\ {\text{ΔRCF}}_{\text{CR}} \text{= Σ(-0.20·m·α·θ)}\end{matrix}\end{matrix}$ ....die Summe von (-0.020·m·α·θ) an der Straßenkontaktfläche;${\text{ΔRCF}}_{\text{SH}} \text{= Σ(0.047·n·β·δ)}$ ....die Summe von (0.047·n·β·δ) an der Straßenkontaktfläche;${\text{ΔRCF}}_{\text{CR1}} {\text{= Σ(0.021·m}}_{\text{1}} {\text{·α}}_{\text{1}} {\text{·θ}}_{\text{1}} \text{)}$ ....die Summe von (-0.020·m₁·α₁·θ₁) an der Straßenkontaktfläche;${\text{ΔRCF}}_{\text{SH1}} {\text{= Σ(0.021·n}}_{\text{1}} {\text{·β}}_{\text{1}} {\text{·δ}}_{\text{1}} \text{)}$ ....die Summe von (0.021·n₁·β₁·δ₁) an der Straßenkontaktfläche;
wobei
m die Anzahl von Rillen in dem Kronenbereich (CR) der Straßenkontaktfläche des Reifens ist;
n die Anzahl von Rillen in dem Schulterbereich (SH) der Straßenkontaktfläche des Reifens ist;
α das Verhältnis der axialen Länge einer Rille in dem Kronenbereich (CR) der Straßenkontaktfläche des Reifens zu der Länge des Kronenbereiches (CR) ist;
θ der Winkel ist, den eine Rille in dem Kronenbereich (CR) der Straßenkontaktfläche des Reifens mit der Axialrichtung des Reifens bildet;
β das Verhältnis der axialen Länge einer Rille in dem Schulterbereich (SH) der Straßenkontaktfläche des Reifens zu der Länge des Schulterbereiches (SH) ist;
δ der Winkel ist, den eine Rille in dem Schulterbereich (SH) der Straßenkontaktfläche des Reifens mit der Axialrichtung des Reifens bildet;
m₁ die Anzahl von Einschnitten (8) in dem Kronenbereich (CR) der Straßenkontaktfläche des Reifens ist;
n₁ die Anzahl von Einschnitten (9) in dem Schulterbereich (SH) der Straßenkontaktfläche des Reifens ist;
α₁ das Verhältnis der axialen Länge eines Einschnittes (8) in dem Kronenbereich (CR) der Straßenkontaktfläche des Reifens zu der Länge des Kronenbereiches (CR) ist;
θ₁ der Winkel ist, den ein Einschnitt (8) in dem Kronenbereich (CR) der Straßenkontaktfläche des Reifens mit der Axialrichtung des Reifens bildet;
β₁ das Verhältnis der axialen Länge eines Einschnitts (9) in dem Schulterbereich (SH) der Straßenkontaktfläche des Reifens zu der Länge des Schulterbereiches ist; und
δ₁ der Winkel ist, den ein Einschnitt (9) in dem Schulterbereich (SH) der Straßenkontaktfläche des Reifens mit der Axialrichtung des Reifens bildet.

## Revendications

1. Procédé de sélection d'une sculpture de bande de roulement de pneumatique en fonction du poids d'un véhicule, comprenant l'équipement d'un véhicule de poids M (kg) avec un pneumatique (1) ayant une bande de roulement comprenant des gorges et des fentes, d'une manière telle que la largeur, du centre CL de la bande de roulement (1) à chaque bord de la surface de contact avec la route, est divisée en trois parties égales, une partie centrale (CR), une partie médiane (MID) et une partie d'épaulement (SH), caractérisé en ce que la bande de roulement a un indice de sculpture PI qui remplit les conditions suivantes :$\begin{matrix}\begin{matrix}\text{0,9 ≦ (60.PI + 900)/M ≦ 1,1} \\ {\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{)} \\ {\text{ΔRCF}}_{\text{CR}} \text{= Σ(-0,020.m.α.θ)}\end{matrix}\end{matrix}$ c'est-à-dire la somme de (-0,020.m.α.θ) à la surface de contact avec la route${\text{ΔRCF}}_{\text{SH}} \text{= Σ(0,047.n.β.δ)}$ c'est-à-dire la somme de (0,047.n.β.δ) à la surface de contact avec la route,${\text{ΔRCF}}_{\text{CR1}} {\text{= Σ(0,020.m}}_{\text{1}} {\text{.α}}_{\text{1}} {\text{.θ}}_{\text{1}} \text{)}$ c'est-à-dire la somme de (0,020.m₁.α₁.θ₁) à la surface de contact avec la route,${\text{ΔRCF}}_{\text{SH1}} {\text{= Σ(0,021.n}}_{\text{1}} {\text{.β}}_{\text{1}} {\text{.δ}}_{\text{1}} \text{)}$ c'est-à-dire la somme de (0,021.n₁.β₁.δ₁) à la surface de contact avec la route,
dans lesquelles
m est le nombre de gorges de la partie centrale de la surface de contact avec la route du pneumatique,
n est le nombre de gorges de la partie d'épaulement de la surface de contact avec la route du pneumatique,
α est le rapport de la longueur axiale d'une gorge de la partie centrale de la surface de contact avec la route du pneumatique à la longueur de la partie centrale,
θ est l'angle d'une gorge de la partie centrale de la surface de contact avec la route du pneumatique, formé avec la direction axiale du pneumatique,
β est le rapport de la longueur axiale d'une gorge de la partie d'épaulement de la surface de contact avec la route du pneumatique à la longueur de la partie d'épaulement,
δ est l'angle d'une gorge de la partie d'épaulement de la surface de contact avec la route du pneumatique, formé avec la direction axiale du pneumatique,
m₁ est le nombre de fentes dans la partie centrale de la surface de contact avec la route du pneumatique,
n₁ est le nombre de fentes dans la partie d'épaulement de la surface de contact avec la route du pneumatique,
α₁ est le rapport de la longueur axiale d'une fente de la partie centrale de la surface de contact avec la route du pneumatique à la longueur de la partie centrale,
θ₁ est l'angle d'une fente de la partie centrale de la surface de contact avec la route du pneumatique avec la direction axiale du pneumatique,
β₁ est le rapport de la longueur axiale d'une fente de la partie d'épaulement de la surface de contact avec la route du pneumatique à la longueur de la partie d'épaulement, et
δ₁ est l'angle d'une fente de la partie d'épaulement de la surface de contact avec la route du pneumatique avec la direction axiale du pneumatique.

2. Procédé de sélection d'un véhicule de poids M (kg) pour un pneumatique destiné à compenser la mise en travers, caractérisé par la sélection d'un pneumatique ayant une bande de roulement (1) comprenant des gorges et des fentes, dans lequel la région comprise entre le centre de la bande de roulement et chaque bord de la surface de contact avec la route est divisée en trois parties égales, une partie centrale (CR), une partie médiane (MID) et une partie d'épaulement (SH), la bande de roulement (1) ayant un indice de sculpture PI qui remplit les conditions suivantes :${\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{)}$ avec${\text{ΔRCF}}_{\text{CR}} \text{= Σ(-0,020.m.α.θ)}$ c'est-à-dire la somme de (-0,020.m.α.θ) à la surface de contact avec la route${\text{ΔRCF}}_{\text{SH}} \text{= Σ(0,047.n.β.δ)}$ c'est-à-dire la somme de (0,047.n.β.δ) à la surface de contact avec la route,${\text{ΔRCF}}_{\text{CR1}} {\text{= Σ(0,020.m}}_{\text{1}} {\text{.α}}_{\text{1}} {\text{.θ}}_{\text{1}} \text{)}$ c'est-à-dire la somme de (0,020.m₁.α₁.θ₁) à la surface de contact avec la route,${\text{ΔRCF}}_{\text{SH1}} {\text{= Σ(0,021.n}}_{\text{1}} {\text{.β}}_{\text{1}} {\text{.δ}}_{\text{1}} \text{)}$ c'est-à-dire la somme de (0,021.n₁.β₁.δ₁) à la surface de contact avec la route,
dans lesquelles
m est le nombre de gorges de la partie centrale de la surface de contact avec la route du pneumatique,
n est le nombre de gorges de la partie d'épaulement de la surface de contact avec la route du pneumatique,
α est le rapport de la longueur axiale d'une gorge de la partie centrale de la surface de contact avec la route du pneumatique à la longueur de la partie centrale,
θ est l'angle d'une gorge de la partie centrale de la surface de contact avec la route du pneumatique, formé avec la direction axiale du pneumatique,
β est le rapport de la longueur axiale d'une gorge de la partie d'épaulement de la surface de contact avec la route du pneumatique à la longueur de la partie d'épaulement,
δ est l'angle d'une gorge de la partie d'épaulement de la surface de contact avec la route du pneumatique, formé avec la direction axiale du pneumatique,
m₁ est le nombre de fentes dans la partie centrale de la surface de contact avec la route du pneumatique,
n₁ est le nombre de fentes dans la partie d'épaulement de la surface de contact avec la route du pneumatique,
α₁ est le rapport de la longueur axiale d'une fente de la partie centrale de la surface de contact avec la route du pneumatique à la longueur de la partie centrale,
θ₁ est l'angle d'une fente de la partie centrale de la surface de contact avec la route du pneumatique avec la direction axiale du pneumatique,
β₁ est le rapport de la longueur axiale d'une fente de la partie d'épaulement de la surface de contact avec la route du pneumatique à la longueur de la partie d'épaulement, et
δ₁ est l'angle d'une fente de la partie d'épaulement de la surface de contact avec la route du pneumatique avec la direction axiale du pneumatique, et
par la sélection du véhicule pour le pneumatique ayant la sculpture de bande de roulement donnant l'indice de sculpture de sorte que$\text{0,9 ≦ (60.PI + 900)/M ≦ 1,1.}$

3. Pneumatique destiné à un véhicule de poids M (kg), destiné à compenser la mise en travers et comprenant une bande de roulement ayant des gorges et des fentes, dans lequel la région comprise entre le centre de la bande de roulement et chaque bord de la surface de contact avec la route est divisée en trois parties égales, une partie centrale (CR), une partie médiane (MID) et une partie d'épaulement (SH), caractérisé en ce que la bande de roulement a un indice de sculpture PI qui remplit les conditions suivantes :$\begin{matrix}\begin{matrix}\text{0,9 ≦ (60.PI + 900)/M ≦ 1,1} \\ {\text{PI = (ΔRCF}}_{\text{CR}} {\text{+ ΔRCF}}_{\text{SH}} {\text{) + (ΔRCF}}_{\text{CR1}} {\text{+ ΔRCF}}_{\text{SH1}} \text{)}\end{matrix}\end{matrix}$ avec${\text{ΔRCF}}_{\text{CR}} \text{= Σ(-0,020.m.α.θ)}$ c'est-à-dire la somme de (-0,020.m.α.θ) à la surface de contact avec la route${\text{ΔRCF}}_{\text{SH}} \text{= Σ(0,047.n.β.δ)}$ c'est-à-dire la somme de (0,047.n.β.δ) à la surface de contact avec la route,${\text{ΔRCF}}_{\text{CR1}} {\text{= Σ(0,020.m}}_{\text{1}} {\text{.α}}_{\text{1}} {\text{.θ}}_{\text{1}} \text{)}$ c'est-à-dire la somme de (0,020.m₁.α₁.θ₁) à la surface de contact avec la route,${\text{ΔRCF}}_{\text{SH1}} {\text{= Σ(0,021.n}}_{\text{1}} {\text{.β}}_{\text{1}} {\text{.δ}}_{\text{1}} \text{)}$ c'est-à-dire la somme de (0,021.n₁.β₁.δ₁) à la surface de contact avec la route, et
dans lesquelles
m est le nombre de gorges de la partie centrale de la surface de contact avec la route du pneumatique,
n est le nombre de gorges de la partie d'épaulement de la surface de contact avec la route du pneumatique,
α est le rapport de la longueur axiale d'une gorge de la partie centrale de la surface de contact avec la route du pneumatique à la longueur de la partie centrale,
θ est l'angle d'une gorge de la partie centrale de la surface de contact avec la route du pneumatique, formé avec la direction axiale du pneumatique,
β est le rapport de la longueur axiale d'une gorge de la partie d'épaulement de la surface de contact avec la route du pneumatique à la longueur de la partie d'épaulement,
δ est l'angle d'une gorge de la partie d'épaulement de la surface de contact avec la route du pneumatique, formé avec la direction axiale du pneumatique,
m₁ est le nombre de fentes dans la partie centrale de la surface de contact avec la route du pneumatique,
n₁ est le nombre de fentes dans la partie d'épaulement de la surface de contact avec la route du pneumatique,
α₁ est le rapport de la longueur axiale d'une fente de la partie centrale de la surface de contact avec la route du pneumatique à la longueur de la partie centrale,
θ₁ est l'angle d'une fente de la partie centrale de la surface de contact avec la route du pneumatique avec la direction axiale du pneumatique,
β₁ est le rapport de la longueur axiale d'une fente de la partie d'épaulement de la surface de contact avec la route du pneumatique à la longueur de la partie d'épaulement, et
δ₁ est l'angle d'une fente de la partie d'épaulement de la surface de contact avec la route du pneumatique avec la direction axiale du pneumatique.
